# EUROPEAN PATENT APPLICATION

(11) **EP 4 410 589 A1**
(43) Date of publication of application: **07.08.2024**
(21) Application number: 22889325.1
(22) Date of filing: 02.11.2022
(51) Int. Cl.: B60L 53/14, B60L 3/00

(54) **FAULT FEEDBACK METHOD AND APPARATUS OF ELECTRIC VEHICLE CHARGING DEVICE, AND DEVICE**

(30) Priority: 03.11.2021 CN 202111310047
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Elkington and Fife LLP
(86) International application number: PCT/CN2022/129290
(87) International publication number: WO 2023/078303

(57) **Abstract**

This disclosure relates to the field of electric vehicles, and in particular to a fault feedback method and apparatus of an electric vehicle charging device, and a device. The method includes: acquiring charging device information of an electric vehicle charging device; determining fault information of the charging device based on the charging device information; acquiring, based on an original communication frequency of the charging device information and the fault information, an adjustment frequency higher than the original communication frequency, and the original communication frequency of the charging device information is set by an electric vehicle controller; and sending the charging device information to the electric vehicle controller according to the adjustment frequency, so that the electric vehicle controller determines a fault of the charging device based on the charging device information. In embodiments of this disclosure, a transmission speed of the charging device information is increased, so that the electric vehicle controller quickly determines and deals with the fault based on the charging device information, thereby reducing potential safety risks in charging.

## Description

### RELATED APPLICATION

This disclosure claims priority to Chinese Patent Application 202111310047.4, filed on November 3, 2021 and entitled "FAULT FEEDBACK METHOD AND APPARATUS OF ELECTRIC VEHICLE CHARGING DEVICE, AND DEVICE", which is hereby incorporated herein by reference in its entirety.

### TECHNICAL FIELD

This disclosure relates to the field of electric vehicles, and in particular to a fault feedback method and apparatus of an electric vehicle charging device, and a device.

### BACKGROUND

With the rapid development of the new energy industry, the number of electric vehicles is increasing, the large-scale use of electric vehicles also brings huge potential safety risks, and it is of great importance to ensure the safety of the electric vehicles during the charging process thereof.

In the prior art, charging piles are mostly used to charge electric vehicles, and the charging process may be summarized as follows: a charging gun of a charging pile is inserted into an electric vehicle charging device; the electric vehicle charging device acquires a type and a charging voltage of the charging gun, and sends the type and the charging voltage of the charging gun to an electric vehicle controller via a communication bus; the electric vehicle controller generates a charging strategy based on the type and the charging voltage of the charging gun, and a state of charge of the electric vehicle, and sends the charging strategy to the charging device according to a certain sending frequency; and the charging device controls a switch to be closed according to the charging strategy, so that a current of the charging gun is transferred to a charging system of the electric vehicle, thereby charging the electric vehicle. In addition, after controlling the switch to be closed according to the charging strategy, the charging device also acquires a switch state, and sends the switch state to the electric vehicle controller at the same sending frequency, thereby realizing closed-loop control of the charging process by the electric vehicle controller.

In order to reduce the pressure of the communication bus of the electric vehicle, the information type and the information sending frequency are usually limited. However, when the electric vehicle charging device is faulty, due to the limit of the information type and the information sending frequency, the electric vehicle controller cannot acquire the fault information of the charging device in time, and thus, cannot adjust the charging strategy in time to control the switch state of the charging device, so that the charging pile continuously charges the electric vehicle through the faulty charging device, thereby increasing potential safety risks in charging.

At present, there is an urgent need for a fault feedback method of an electric vehicle charging device, so as to solve the problem in the prior art that when the electric vehicle charging device is faulty, the electric vehicle controller cannot acquire the fault information of the vehicle charging device in time, thereby increasing potential safety risks in charging.

### SUMMARY

In order to solve the problem in the prior art that when the electric vehicle charging device is faulty, the electric vehicle controller cannot acquire the fault information of the vehicle charging device in time, thereby increasing potential safety risks in charging, embodiments of this disclosure provide a fault feedback method and apparatus of an electric vehicle charging device, and a device. When a fault of the electric vehicle is detected, the charging device information at the time of the fault is sent to the electric vehicle controller, without the need for additional hardware or additional types of information, so that the electric vehicle controller can acquire the fault of the vehicle charging device in time, thereby reducing potential safety risks in charging.

In order to solve the above technical problems, the specific technical solutions of this disclosure are as follows:
In one aspect, an embodiment of this disclosure provides a fault feedback method of an electric vehicle charging device, including:
acquiring charging device information of an electric vehicle charging device;
determining fault information of the charging device based on the charging device information;
acquiring, based on an original communication frequency of the charging device information and the fault information, an adjustment frequency higher than the original communication frequency, and the original communication frequency of the charging device information is set by an electric vehicle controller; and
sending the charging device information to the electric vehicle controller according to the adjustment frequency, so that the electric vehicle controller determines a fault of the charging device based on the charging device information.

Further, the fault information includes a fault type.

Further, the acquiring, based on an original communication frequency of the charging device information and the fault information, the adjustment frequency higher than the original communication frequency further includes: finding a frequency value that corresponds to both the original communication frequency and the fault type in a preset frequency table, and taking the found frequency value as the adjustment frequency.

Further, the charging device information includes a supply voltage of the charging device and a switch state of the charging device.

Further, the determining the fault information of the charging device based on the charging device information further includes:
calculating a difference between the supply voltage and a supply voltage preset value; and
determining the fault type of the electric vehicle charging device based on the difference.

Further, the determining the fault information of the charging device based on the charging device information further includes:
determining the fault type of the electric vehicle charging device based on the supply voltage and a pre-configured correspondence between a preset supply voltage range and the fault type.

Further, the fault type includes undervoltage with function limitation, undervoltage without function limitation, overvoltage with function limitation, and overvoltage without function limitation.

Further, the method further includes:
judging whether the fault type of the charging device being the undervoltage without function limitation or the overvoltage without function limitation has changed within a preset time; and
sending, by the charging device, the supply voltage of the charging device to the electric vehicle controller according to the original communication frequency, if it is judged to be not changed.

Further, the determining the fault information of the charging device based on the charging device information further includes:
determining the fault type of the electric vehicle charging device based on the switch state and a pre-configured correspondence between a preset switch state and the fault type.

Further, before the acquiring the charging device information of the electric vehicle charging device, the method further includes:
acquiring a charging strategy sent by the electric vehicle controller using the original communication frequency; and
executing the charging strategy to obtain an execution result, and the execution result includes the switch state of the charging device.

Further, the execution result further includes an execution state indicating whether the charging strategy has been executed; and
the determining the fault information of the charging device based on the charging device information further includes:
calculating a difference between the switch state of the charging device and the charging strategy, and determining the fault type of the charging device based on the difference, and/or determining the fault type of the charging device based on the execution state.

Further, the fault feedback method of an electric vehicle charging device provided by this embodiment of this disclosure further includes:
judging whether the charging device still has a fault based on the charging device information; and
communicating, by the charging device, with the electric vehicle controller using the original communication frequency, if it is judged that there is no fault.

In another aspect, an embodiment of this disclosure further provides a fault feedback apparatus of an electric vehicle charging device, including:
a charging device information acquisition unit configured to acquire charging device information of an electric vehicle charging device;
a fault information determination unit configured to determine fault information of the charging device based on the charging device information;
an adjustment frequency acquisition unit configured to acquire, based on an original communication frequency of the charging device information and the fault information, an adjustment frequency higher than the original communication frequency, and the original communication frequency of the charging device information is set by an electric vehicle controller; and
a charging device information sending unit configured to send the charging device information to the electric vehicle controller according to the adjustment frequency, so that the electric vehicle controller determines a fault of the charging device based on the charging device information.

Further, the fault information includes a fault type.

Further, the adjustment frequency acquisition unit further includes:
an original communication frequency acquisition module configured to acquire the original communication frequency; and
an adjustment frequency acquisition module configured to find a frequency value that corresponds to both the original communication frequency and the fault type in a preset frequency table, and take the found frequency value as the adjustment frequency.

Further, the charging device information includes a supply voltage of the charging device and a switch state of the charging device.

Further, the fault information determination unit further includes:
a supply voltage difference calculation module configured to calculate a difference between the supply voltage and a supply voltage preset value; and
the fault information determination unit is further configured to determine the fault type of the electric vehicle charging device based on the difference.

Further, the fault information determination unit further includes:
a voltage range comparison module configured to determine the fault type of the electric vehicle charging device based on the supply voltage and a pre-configured correspondence between a preset supply voltage range and the fault type.

Further, the fault information determination unit is further configured that the fault type includes undervoltage with function limitation, undervoltage without function limitation, overvoltage with function limitation, and overvoltage without function limitation.

Further, the fault information determination unit further includes:
a fault type monitoring module configured to judge whether the fault type of the charging device being the undervoltage without function limitation or the overvoltage without function limitation has changed within a preset time; and
the charging device sends the supply voltage of the charging device to the electric vehicle controller according to the original communication frequency, if it is judged to be not changed.

Further, the fault information determination unit further includes:
a switch state comparison module configured to determine the fault type of the electric vehicle charging device based on the switch state and a pre-configured correspondence between a preset switch state and the fault type.

Further, the charging device information acquisition unit further includes:
a charging strategy acquisition module configured to acquire a charging strategy sent by the electric vehicle controller using the original communication frequency; and
a charging strategy execution module configured to execute the charging strategy to obtain an execution result, and the execution result includes the switch state of the charging device.

Further, the execution result further includes an execution state indicating whether the charging strategy has been executed; and
the fault information determination unit further includes:
a switch state difference calculation module configured to calculate a difference between the switch state of the charging device and the charging strategy, and determine the fault type of the charging device based on the difference, and/or an execution state analysis module configured to determine the fault type of the charging device based on the execution state.

Further, the fault information determination unit is further configured to determine whether the charging device information still has a fault based on the charging device information; and
the charging device information sending unit is further configured to communicate with the electric vehicle controller using the original communication frequency, if it is judged that there is no fault.

In another aspect, an embodiment of this disclosure further provides a computer device, including a memory, a processor, and a computer program stored in the memory. When executing the computer program, the processor implements the above method.

Finally, an embodiment of this disclosure further provides a computer storage medium storing a computer program. When run by a processor of a computer device, the computer program executes the above method.

According to the embodiments of this disclosure, the electric vehicle communicates with the electric vehicle controller using the original communication frequency. When a fault occurs in the electric vehicle charging device, the adjustment frequency higher than the original communication frequency is acquired based on the fault information and the original communication frequency, and the charging device information is sent to the electric vehicle controller according to the adjustment frequency. A transmission speed of the charging device information is increased, so that the electric vehicle controller quickly acquires the charging device information at the time of the fault, so that the electric vehicle controller can quickly determine and deal with the fault based on the charging device information, thereby reducing potential safety risks in charging.

### BRIEF DESCRIPTION OF THE DRAWINGS

To describe the technical solutions in the embodiments of this disclosure or in the related art more clearly, the drawings to be used in the description of the embodiments or in the related art will be briefly introduced below. Obviously, the drawings in the following description only illustrate some embodiments of the present disclosure, and those of ordinary skill in the art may obtain other drawings from them without paying any inventive effort.
FIG. 1 shows a schematic diagram of a system for implementing a fault feedback method of an electric vehicle charging device according to an embodiment of this disclosure;
FIG. 2 shows a flowchart of a fault feedback method of an electric vehicle charging device according to an embodiment of this disclosure;
FIG. 3 shows a process of determining a fault type based on a supply voltage according to an embodiment of this disclosure;
FIG. 4 shows a process of obtaining an execution result according to a charging strategy according to an embodiment of this disclosure;
FIG. 5 shows a process of returning to the original communication frequency after determining that the fault state has been eliminated;
FIG. 6 shows a schematic structural diagram of a fault feedback apparatus of an electric vehicle charging device according to an embodiment of this disclosure;
FIG. 7 shows a detailed structural diagram of the fault feedback apparatus of an electric vehicle charging device according to an embodiment of this disclosure;
FIG. 8 shows a data flow diagram showing that the charging device feeds back the fault to the controller according to an embodiment of this disclosure; and
FIG. 9 shows a schematic structural diagram of a computer device according to an embodiment of this disclosure.

### [Description of reference signs]:

101, charging pile;
102, electric vehicle;
1021, charging device;
1022, controller;
1023, battery;
601, charging device information acquisition unit;
602, fault information determination unit;
603, adjustment frequency acquisition unit;
604, charging device information sending unit;
701, charging device information acquisition unit;
7011, supply voltage acquisition module;
7012, charging strategy acquisition module;
7013, charging strategy execution module;
7014, execution state acquisition module;
7015, switch state acquisition module;
702, fault information determination unit;
7021, supply voltage difference calculation module;
7022, switch state difference calculation module;
7023, execution state analysis module;
7024, voltage range comparison module;
7025, fault type monitoring module;
7026, switch state comparison module;
703, adjustment frequency acquisition unit;
7031, original communication frequency acquisition module;
7032, adjustment frequency acquisition module;
704, charging device information sending unit;
902, computer device;
904, processing device;
906, storage resource;
908, driving mechanism;
910, communication bus;
912, network interface.

### DESCRIPTION OF THE EMBODIMENTS

The technical solutions in embodiments of this disclosure are clearly and completely described in the following with reference to the drawings in the embodiments of this disclosure. Obviously, the described embodiments are merely some rather than all of the embodiments of this disclosure. All other embodiments obtained by a person of ordinary skill in the art based on the embodiments of this disclosure without creative efforts shall fall within the protection scope of this disclosure.

It should be noted that the terms "first", "second" and the like in the specification and claims of this disclosure are used to distinguish similar objects, and are not necessarily used to describe a particular order or sequence. It should be understood that the data described as such may be interchanged where appropriate, so that the embodiments of this disclosure described herein can be implemented in a sequence other than those illustrated or described herein. In addition, the terms "including" and "comprising" and any variants thereof are intended to cover a non-exclusive inclusion. For example, a process, method, apparatus, product, or device that includes a series of steps or units is not necessarily limited to those steps or units that are clearly listed, but may include other steps or units that are not listed or inherent to those processes, methods, products or devices.

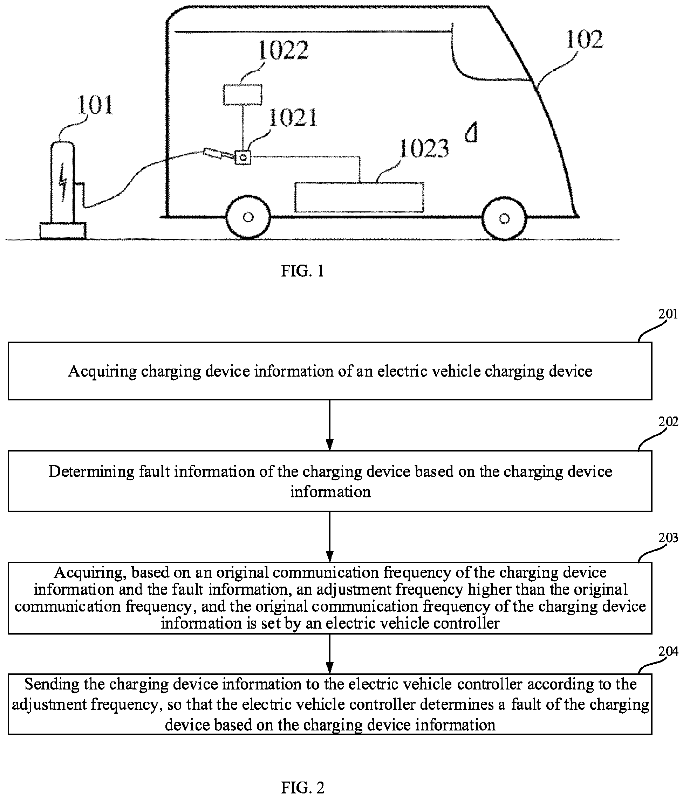

FIG. 1 shows a schematic diagram of a system for implementing a fault feedback method of an electric vehicle charging device according to an embodiment of this disclosure, which includes: a charging pile 101 and an electric vehicle 102. The electric vehicle 102 includes a charging device 1021, a controller 1022, and a battery 1023. when charging the electric vehicle 102, a charging gun of the charging pile 101 is inserted into the charging device 1021 of the electric vehicle 102. The charging device 1021 acquires a type and a charging voltage of the charging gun of the charging pile 101, and sends the type and the charging voltage of the charging gun to the controller 1022 via a communication bus. The controller 1022 generates a charging strategy based on the type and the charging voltage of the charging gun, and a state of charge (SOC) of a battery 1023, and sends the charging strategy to the charging device 1021 according to a certain sending frequency. The charging device 1021 controls a switch to be closed according to the charging strategy, so that energy of the charging pile 101 is transferred to the battery 1023 of the electric vehicle 102, thereby charging the electric vehicle 102. In addition, after controlling the switch to be closed according to the charging strategy, the charging device 1021 also acquires a switch state, and sends the switch state to the controller 1022 at the same sending frequency, thereby realizing closed-loop control of the charging process by the controller 1022. In the embodiments of this disclosure, the electric vehicle 102 is an electric automobile or another type of electric vehicle, such as an electric bike. The embodiments of this specification do not limit the type of the electric vehicle.

In order to reduce the pressure of the communication bus of the electric vehicle 102, the information type and the information sending frequency are usually limited. However, when the charging device 1021 is faulty, due to the limit of the information type and the information sending frequency, the controller 1022 cannot acquire the fault information of the charging device 1021 in time, and thus, cannot adjust the charging strategy in time to control the switch state of the charging device 1021, so that the charging pile 101 continuously charges the electric vehicle 102 through the faulty charging device 1021, thereby increasing potential safety risks in charging.

A fault feedback method and apparatus of an electric vehicle charging device, and a device according to the embodiments of this disclosure may be provided in the charging device 1021 to solve the problem in the prior art that when the charging device 1021 is faulty, the controller 1022 cannot acquire the fault information of the charging device 1021 in time, thereby increasing potential safety risks in charging.

Specifically, an embodiment of this disclosure provides a fault feedback method of an electric vehicle charging device, which can increase a transmission speed of the charging device information, and reduce potential safety risks in charging. FIG. 2 shows a flowchart of a fault feedback method of an electric vehicle charging device according to an embodiment of this disclosure. A fault feedback process of an electric vehicle charging device is described in this figure, but may include more or fewer operating steps based on conventional or non-creative work. The sequence of steps listed in this embodiment is merely one of execution sequences of steps, and does not represent the unique execution sequence. When executed by a system or apparatus product in practice, the steps may be executed according to the sequence of the method shown in the embodiment or drawing or executed in parallel. Specifically, as shown in FIG. 2, the method may include:
Step 201: Acquiring charging device information of an electric vehicle charging device.
Step 202: Determining fault information of the charging device based on the charging device information.
Step 203: Acquiring, based on an original communication frequency of the charging device information and the fault information, an adjustment frequency higher than the original communication frequency, and the original communication frequency of the charging device information is set by an electric vehicle controller.
Step 204: Sending the charging device information to the electric vehicle controller according to the adjustment frequency, so that the electric vehicle controller determines a fault of the charging device based on the charging device information.

According to the method in this embodiment of this disclosure, the electric vehicle communicates with the electric vehicle controller using the original communication frequency. When a fault occurs in the electric vehicle charging device, the adjustment frequency higher than the original communication frequency is acquired based on the fault information and the original communication frequency, and the charging device information is sent to the electric vehicle controller according to the adjustment frequency. A transmission speed of the charging device information is increased, so that the electric vehicle controller quickly acquires the charging device information at the time of the fault, so that the electric vehicle controller can quickly determine and deal with the fault based on the charging device information, thereby reducing potential safety risks in charging.

In this embodiment of this disclosure, when the electric vehicle charging device operates normally, the charging device and the controller need to communicate continuously, and the charging device sends the charging device information to the controller according to a certain frequency, so that the controller can guide charging based on the charging device information. When the charging device is faulty, the adjustment frequency higher than the original communication frequency is obtained based on original communication frequency of the charging device information and the fault information, and the charging device information is sent to the controller according to the adjustment frequency, so that the controller can receive the charging device information and determine the fault of the charging device based on the charging device information more quickly.

According to an embodiment of this disclosure, the fault information of the charging device determined based on the charging device information in step 202 includes a fault type.

In this embodiment of this disclosure, the charging device information may be compared with preset fault features to determine the fault type. The charging device information may include various information types, so various fault types may be determined based on the charging device information.

According to an embodiment of this disclosure, in order to increase the transmission speed of the charging device information and ensure normal operation of other modules of the electric vehicle, the process of acquiring the adjustment frequency in step 203 further includes: finding a frequency value that corresponds to both the original communication frequency and the fault type in a preset frequency table, and taking the found frequency value as the adjustment frequency.

In this embodiment of this disclosure, the frequency value that corresponds to both the designated original communication frequency and fault type may be obtained from the preset frequency table by using the original communication frequency and the fault type as indexes. The magnitude of the frequency value may indicate the severity of the fault type. The more severe a fault is, the greater the corresponding frequency value will be. In this way, the time for the controller to receive the charging device information is reduced. In addition, the original communication frequency of the charging device information is set by the electric vehicle controller, and the original communication frequency may indicate the load of the communication bus of the electric vehicle, so the current load of the communication bus is taken into account when acquiring the adjustment frequency in this embodiment of this disclosure, thereby avoiding affecting normal operation of other modules of the electric vehicle when increasing the sending frequency of the charging device information.

According to an embodiment of this disclosure, the charging device information of the electric vehicle charging device obtained in step 201 further includes a supply voltage of the charging device and a switch state of the charging device.

In this embodiment of this disclosure, when the supply voltage of the charging device is inconsistent with the preset normal operating voltage, the normal operation of the charging device will be affected, causing the fault of the charging device. Therefore, it is required to send the supply voltage of the charging device to the controller, so that the controller can determine the fault of the charging device based on the magnitude of the supply voltage. In addition, when the switch state of the charging device is inconsistent with the preset switch state, the charging device will not be able to charge the electric vehicle according to the charging strategy set by the controller, causing the fault of the charging device and thus increasing potential safety risks in charging. Therefore, it is required to send the switch state of the charging device to the controller, so that the controller can determine the fault of the charging device based on the switch state.

In this step, in an example where the preset normal operating voltage of the charging device is in the range of 8.4 V to 16.2 V, according to an embodiment of this disclosure, the fault type indicated by the supply voltage of the charging device includes: undervoltage with function limitation, undervoltage without function limitation, overvoltage with function limitation, and overvoltage without function limitation. The supply voltage value corresponding to the above fault type may be shown in Table 1.

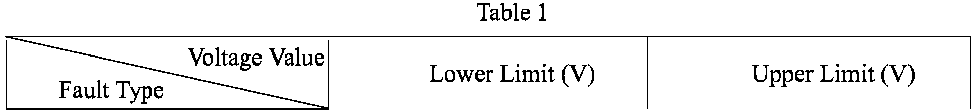

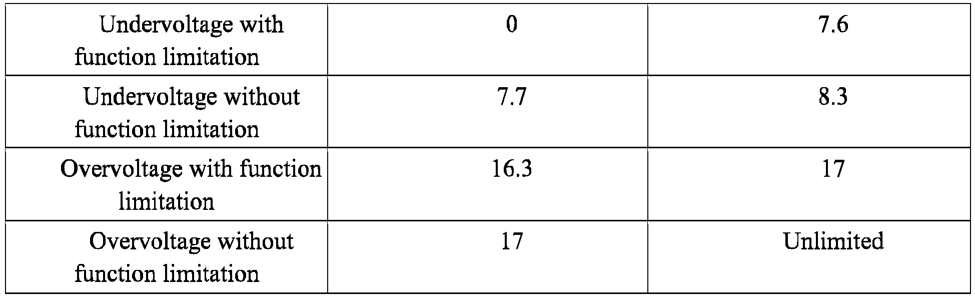

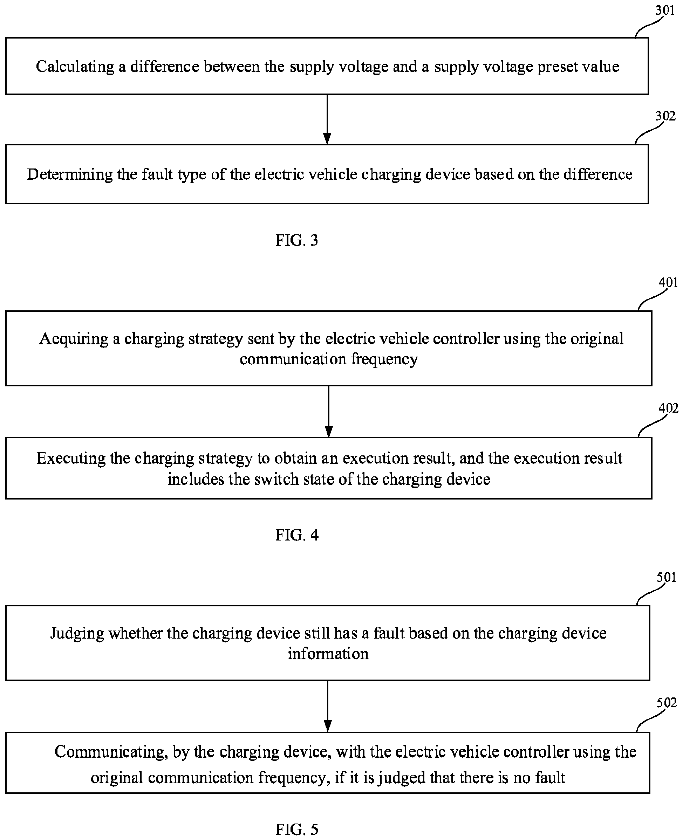

According to an embodiment of this disclosure, in order to determine the fault type of the charging device according to the supply voltage, as shown in FIG. 3, step 202 further includes:
Step 301: Calculating a difference between the supply voltage and a supply voltage preset value.
Step 302: Determining the fault type of the electric vehicle charging device based on the difference.

In this embodiment of this disclosure, the difference between the current supply voltage and the supply voltage preset value may indicate whether undervoltage or overvoltage occurs to the charging device. If undervoltage occurs to the charging device, the excessively low supply voltage will not be able to meet the operating needs of the modules of the charging device. If overvoltage occurs to the charging device, the excessively high supply voltage will lead to the damage of one or some modules of the charging device. In addition, when undervoltage or overvoltage occurs, the specific faulty modules may be further determined based on physical characteristics of electronic components in the modules of the charging device. For example, when the supply voltage is lower than the preset voltage value within a certain range, it can be determined which modules can still operate normally and which modules cannot operate normally.

Therefore, in this step, the difference between the supply voltage and the supply voltage preset value is calculated, and the fault type of the electric vehicle charging device is determined based on the difference, so that the adjustment frequency higher than the original communication frequency can be acquired based on the original communication frequency of the charging device information and the fault type, and the supply voltage of the charging device can be sent to the electric vehicle controller according to the adjustment frequency, and the electric vehicle controller can determine the fault of the charging device based on the supply voltage. In addition, the fault type of the charging device may also be determined by comparing the supply voltage range corresponding to each fault state with the supply voltage, which is not limited in the embodiments of this specification.

According to an embodiment of this disclosure, step 202 further includes: determining the fault type of the electric vehicle charging device based on the supply voltage and a pre-configured correspondence between a preset supply voltage range and the fault type.

In this step, the correspondence between the supply voltage range and the fault type as shown in Table 1 may be pre-configured, and then the supply voltage range corresponding to the current supply voltage value of the charging device may be searched, thereby determining the fault type corresponding to the current supply voltage value. For example, if the current supply voltage is 8 V, according to the correspondence between the supply voltage range and the fault type shown in Table 1, it is determined that the current fault type is undervoltage without function limitation.

With reference to Table 1, the preset frequency table in this embodiment of this disclosure may be shown in Table 2:

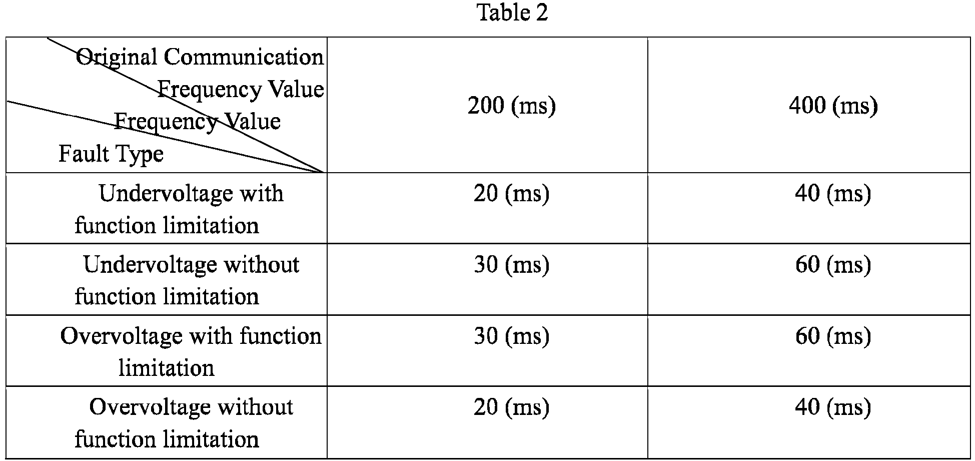

According to the contents in Table 2, if the original communication frequency is 200 ms, when the fault type of the charging device is determined as undervoltage with function limitation based on the supply voltage of the charging device, then the supply voltage of the charging device is sent to the electric vehicle controller using an adjustment frequency of 20 ms.

According to an embodiment of this disclosure, in order to avoid the problem that when the fault determined based on the supply voltage of the charging device is not severe, the charging device still sends the supply voltage of the charging device to the electric vehicle controller using the adjustment frequency higher than the original communication frequency, causing excessive pressure of the communication bus, the fault feedback method of an electric vehicle charging device provided by this embodiment of this disclosure further includes: judging whether the fault type of the charging device being the undervoltage without function limitation or the overvoltage without function limitation has changed within a preset time; and sending, by the charging device, the supply voltage of the charging device to the electric vehicle controller according to the original communication frequency, if it is judged to be not changed.

In this step, the faults of the undervoltage without function limitation and the overvoltage without function limitation are not severe, and the charging device can still operate normally, so it can be judged whether the fault type of the charging device being the undervoltage without function limitation or the overvoltage without function limitation has changed within the preset time. The preset time may be set based on the adjustment frequency. For example, if the adjustment frequency is 20 ms, then it can be judged whether the fault type of the charging device being the undervoltage without function limitation or the overvoltage without function limitation has changed within the time range corresponding to 5 adjustment frequencies. If it is judged to be not changed, the charging device sends the supply voltage of the charging device to the electric vehicle controller according to the original communication frequency, thereby reducing the pressure of the communication bus of the electric automobile.

According to an embodiment of this disclosure, step 202 further includes: determining the fault type of the electric vehicle charging device based on the switch state and a pre-configured correspondence between a preset switch state and the fault type.

In this step, the correspondence between the switch state and the fault type may be pre-configured, and then it is determined which pre-configured switch state the current switch state of the charging device belongs to, thereby determining the fault type corresponding to the current switch state.

According to an embodiment of this disclosure, in order to obtain the switch state in time, thereby reducing the probability of wrong determination and improving the accuracy of fault feedback, as shown in FIG. 4, before step 201, the method further includes:
Step 401: Acquiring a charging strategy sent by the electric vehicle controller using the original communication frequency.
Step 402: Executing the charging strategy to obtain an execution result, and the execution result includes the switch state of the charging device.

In this embodiment of this disclosure, the controller sends the charging strategy using the original communication frequency of the charging device information in step 203, the charging strategy includes the switch state of the charging device, and the charging device adjusts the switch state according to the charging strategy when executing the charging strategy, so that the current of the charging pile of is charged into the battery of the electric vehicle through the switch of the charging device. In this step, the charging device acquires the switch state after executing the charging strategy, which improves the timeliness of acquiring the switch state, thereby reducing the probability of wrong determination and improving the accuracy of fault feedback.

According to an embodiment of this disclosure, the execution result obtained in step 402 further includes an execution state indicating whether the charging strategy in step 401 has been executed.

In this embodiment of this disclosure, the fault of the charging device may further include charging strategy unexecuted and charging strategy executed unsuccessfully, so step 202 further includes: calculating a difference between the switch state of the charging device and the charging strategy, and determining the fault type of the charging device based on the difference, and/or determining the fault type of the charging device based on the execution state.

In this step, the difference between the switch state of the charging device and a switch state in the charging strategy may be calculated, and a switch of the charging device different from the charging strategy may be found based on the difference; the fault of the charging strategy unexecuted may be determined based on the execution state; and the fault of the charging strategy executed unsuccessfully may be determined based on the combination of fault type determined based on the difference and the fault type of the charging device determined based on the execution state.

According to an embodiment of this disclosure, in order to avoid the problem that the electric vehicle charging device and the controller still communicate at the adjustment frequency higher than the original communication frequency after the fault is eliminated, causing excessive pressure of the communication bus, as shown in FIG. 5, the fault feedback method of an electric vehicle charging device provided by this embodiment of this disclosure further includes:
Step 501: Judging whether the charging device still has a fault based on the charging device information.
Step 502: Communicating, by the charging device, with the electric vehicle controller using the original communication frequency, if it is judged that there is no fault.

In this step, the charging device information may include the supply voltage of the charging device and the switch state of the charging device, and it may be judged whether the charging device still has a fault based on the difference between the supply voltage of the charging device and the supply voltage preset value, or based on the difference between the switch state of the charging device and the acquired charging strategy sent by the electric vehicle controller and/or based on the execution state of the charging strategy. If it is judged that there is no fault, the charging device communicates with the electric vehicle controller using the original communication frequency to reduce the pressure of the communication bus, thereby ensuring normal operation of other modules of the electric vehicle.

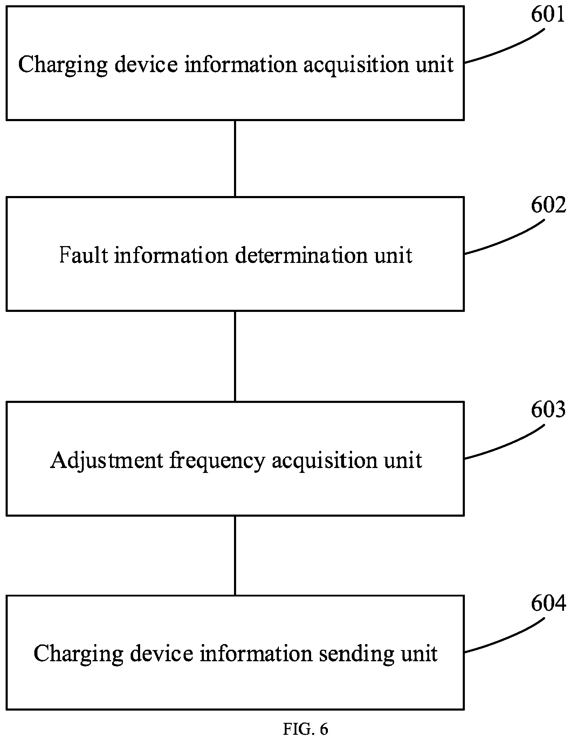

Based on the same inventive concept, an embodiment of this specification further provides a fault feedback apparatus of an electric vehicle charging device, as shown in FIG. 6, including a charging device information acquisition unit 601, a fault information determination unit 602, an adjustment frequency acquisition unit 603, and a charging device information sending unit 604.

The charging device information acquisition unit 601 is configured to acquire charging device information of an electric vehicle charging device.

The fault information determination unit 602 is configured to determine fault information of the charging device based on the charging device information acquired by the charging device information acquisition unit 601.

The adjustment frequency acquisition unit 603 is configured to acquire, based on the fault information determined by the fault information determination unit 602 and an original communication frequency of the charging device information, an adjustment frequency higher than the original communication frequency. The original communication frequency of the charging device information is set by an electric vehicle controller.

The charging device information sending unit 604 is configured to send the charging device information acquired by the charging device information acquisition unit 601 to the electric vehicle controller according to the adjustment frequency obtained by the adjustment frequency acquisition unit 603, so that the electric vehicle controller determines a fault of the charging device based on the charging device information.

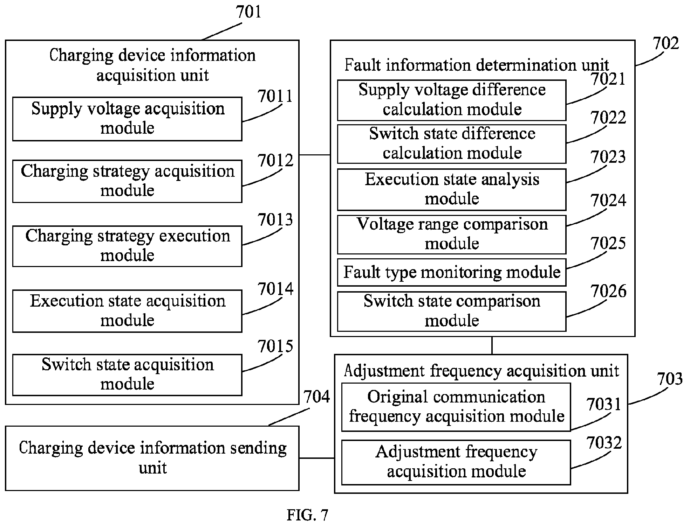

Further, a detailed structural diagram of the fault feedback apparatus of an electric vehicle charging device according to an embodiment of this disclosure is shown in FIG. 7. This figure illustrates the detailed structure of the fault feedback apparatus of an electric vehicle charging device, which includes a charging device information acquisition unit 701, a fault information determination unit 702, an adjustment frequency acquisition unit 703, and a charging device information sending unit 704.

According to an embodiment of this disclosure, the charging device information acquisition unit 701 further includes a supply voltage acquisition module 7011, which is configured to acquire a supply voltage of the charging device, so that the electric vehicle controller determines the fault of the charging device according to a magnitude of the supply voltage.

According to an embodiment of this disclosure, the charging device information acquisition unit 701 further includes a charging strategy acquisition module 7012, which is configured to acquire a charging strategy (including a switch state of the charging device) sent by the electric vehicle controller using the original communication frequency, and then send the charging strategy to a charging strategy execution module 7013, so that the charging strategy execution module 7013 adjusts the switch state of the charging device according to the acquired charging strategy, and the current of the charging pile is charged into the battery of the electric vehicle through the switch of the charging device.

According to an embodiment of this disclosure, the charging device information acquisition unit 701 further includes the charging strategy execution module 7013, which is configured to adjust the switch state of the charging device according to the charging strategy acquired by the charging strategy acquisition module 7012, so that the current of the charging pile is charged into the battery of the electric vehicle through the switch of the charging device.

According to an embodiment of this disclosure, the charging device information acquisition unit 701 further includes an execution state acquisition module 7014, which is configured to acquire an execution state of the charging strategy, and the state may indicate whether the charging strategy has been executed by the charging strategy execution module 7013. In this embodiment of this disclosure, faults of the charging device further include charging strategy unexecuted and charging strategy executed unsuccessfully both of which are indicated by the execution state. The execution state acquisition module 7014 sends the acquired execution state to the fault information determination unit 702, so that the fault information determination unit 702 determines the fault type of the charging device based on the execution state.

According to an embodiment of this disclosure, the charging device information acquisition unit 701 further includes a switch state acquisition module 7015, which is configured to acquire a switch state of the charging device after the charging strategy execution module 7013 executes the charging strategy, and then send the switch state of the charging device to the fault information determination unit 702, so that the fault information determination unit 702 determines the fault type of the charging device based on the switch state of the charging device.

According to an embodiment of this disclosure, the fault information determination unit 702 further includes a supply voltage difference calculation module 7021, which is configured to determine the fault type of the charging device based on the supply voltage of the charging device acquired by the supply voltage acquisition module 7011. In this embodiment of this disclosure, the difference between the current supply voltage and the supply voltage preset value may indicate whether undervoltage or overvoltage occurs to the charging device. If undervoltage occurs to the charging device, the excessively low supply voltage will not be able to meet the operating needs of all the modules of the charging device. If overvoltage occurs to the charging device, the excessively high supply voltage will lead to the damage of one or some modules of the charging device. In addition, when undervoltage or overvoltage occurs, the specific faulty modules may be further determined based on physical characteristics of electronic components in the modules of the charging device. For example, when the supply voltage is lower than the preset voltage value within a certain range, it can be determined which modules can still operate normally and which modules cannot operate normally. Specifically, the difference between the supply voltage and the supply voltage preset value may be calculated, and the fault type of the electric vehicle charging device may be determined based on the difference. And, the adjustment frequency acquisition unit 703 acquires the adjustment frequency higher than the original communication frequency based on the original communication frequency of the charging device information and the fault type, the charging device information sending unit 704 sends the supply voltage of the charging device to the electric vehicle controller according to the adjustment frequency, and the electric vehicle controller determines the fault of the charging device based on the supply voltage.

According to an embodiment of this disclosure, the fault information determination unit 702 further includes a switch state difference calculation module 7022, which is configured to calculate a difference between the switch state acquired by the switch state acquisition module 7015 and the switch state in the charging strategy acquired by the charging strategy acquisition module 7012, find a switch of the charging device different from the charging strategy based on the difference, and determine the fault type of the charging device. And, the adjustment frequency acquisition unit 703 acquires the adjustment frequency higher than the original communication frequency based on the original communication frequency of the charging device information and the fault type, the charging device information sending unit 704 sends the switch state of the charging device to the electric vehicle controller according to the adjustment frequency, and the electric vehicle controller determines the fault of the charging device based on the switch state.

According to an embodiment of this disclosure, the fault information determination unit 702 further includes an execution state analysis module 7023, which is configured to analyze the execution state acquired by the execution state acquisition module 7014 and determine the fault of the charging strategy unexecuted based on the execution state.

According to an embodiment of this disclosure, the fault information determination unit 702 further includes a voltage range comparison module 7024, which is configured to determine the fault type of the electric vehicle charging device based on the switch state and a pre-configured correspondence between a preset switch state and the fault type. The fault type indicated by the supply voltage of the charging device in this embodiment of this disclosure may include undervoltage with function limitation, undervoltage without function limitation, overvoltage with function limitation, and overvoltage without function limitation that are shown in Table 1.

Specifically, the correspondence between the supply voltage range and the fault type as shown in Table 1 may be pre-configured, and then a supply voltage range corresponding to the current supply voltage value of the charging device may be found, thereby determining the fault type corresponding to the current supply voltage value. For example, if the current supply voltage is 8 V, according to the correspondence between the supply voltage range and the fault type shown in Table 1, it is determined that the current fault type is undervoltage without function limitation.

According to an embodiment of this disclosure, the fault information determination unit 702 further includes a fault type monitoring module 7025, which is configured to judge whether the fault type of the charging device being the undervoltage without function limitation or the overvoltage without function limitation has changed within a preset time; and the charging device sends the supply voltage of the charging device to the electric vehicle controller according to the original communication frequency, if it is judged to be not changed.

In this embodiment of this disclosure, the faults of the undervoltage without function limitation and the overvoltage without function limitation are not severe, and the charging device can still operate normally, so it can be judged whether the fault type of the charging device being the undervoltage without function limitation or the overvoltage without function limitation has changed within the preset time. The preset time may be set based on the adjustment frequency. For example, if the adjustment frequency is 20 ms, then it can be judged whether the fault type of the charging device being the undervoltage without function limitation or the overvoltage without function limitation has changed within the time range corresponding to 5 adjustment frequencies. The charging device sends the supply voltage of the charging device to the electric vehicle controller according to the original communication frequency, if it is judged to be not changed. thereby reducing the pressure of the communication bus of the electric automobile.

According to an embodiment of this disclosure, the fault information determination unit 702 further includes a switch state comparison module 7026, which is configured to determine the fault type of the electric vehicle charging device based on the switch state and a pre-configured correspondence between a preset switch state and the fault type.

In this embodiment of this disclosure, the correspondence between the switch state and the fault type may be pre-configured, and then it is determined which pre-configured switch state the current switch state of the charging device belongs to, thereby determining the fault type corresponding to the current switch state.

According to an embodiment of this disclosure, the fault information determination unit 702 may further determine the fault of the charging strategy executed unsuccessfully based on the fault type determined by the switch state difference calculation module 7022 and the fault type determined by the execution state analysis module 7023.

According to an embodiment of this disclosure, the fault information determination unit 702 may further determine whether the charging device still has a fault based on the charging device information acquired by the charging device information acquisition unit 701, and the charging device communicates with the electric vehicle controller using the original communication frequency acquired by the original communication frequency acquisition module 7031, if it is judged that there is no fault, thereby avoiding the problem that the electric vehicle charging device and the controller still communicate using the adjustment frequency higher than the original communication frequency after the fault is eliminated, causing excessive pressure of the communication bus.

Specifically, it may be determined whether the charging device still has a fault based on the difference between the supply voltage of the charging device acquired by the supply voltage acquisition module 7011 and the supply voltage preset value, or based on the difference between the switch state of the charging device acquired by the switch state acquisition module 7015 and the charging strategy acquired by the charging strategy acquisition module 7012 and/or based on the execution state of the charging strategy acquired by the execution state acquisition module 7014.

According to an embodiment of this disclosure, the adjustment frequency acquisition unit 703 further includes an original communication frequency acquisition module 7031, which is configured to acquire the original communication frequency for communication with the charging device set by the electric vehicle controller based on the load of the communication bus of the electric vehicle. When the electric vehicle charging device operates normally, the charging device and the controller continuously communicate according to the original communication frequency, the charging device sends the charging device information including the supply voltage and the switch state to the controller using the original communication frequency, and the controller guides charging based on the charging device information.

According to an embodiment of this disclosure, the adjustment frequency acquisition unit 703 further includes an adjustment frequency acquisition module 7032, which is configured to acquire an adjustment frequency higher than the original communication frequency based on the fault type of the charging device determined by the fault information determination unit 702 and the original communication frequency acquired by the original communication frequency acquisition module 7031. And, the adjustment frequency acquisition unit 703 acquires the adjustment frequency higher than the original communication frequency based on the original communication frequency of the charging device information and the fault type, the charging device information sending unit 704 sends the supply voltage of the charging device to the electric vehicle controller according to the adjustment frequency, and the electric vehicle controller determines the fault of the charging device based on the supply voltage.

Specifically, a frequency value that corresponds to both the original communication frequency and fault type may be found in the preset frequency table, and the found frequency value may be used as the adjustment frequency. The frequency value that corresponds to both the designated original communication frequency and fault type may be determined from the preset frequency table that uses the original communication frequency and the fault type as indexes. The magnitude of the frequency value may indicate the severity of the fault type. The more severe a fault is, the greater the corresponding frequency value will be. In this way, the time for the controller to receive the charging device information is reduced. In addition, the original communication frequency of the charging device information is set by the electric vehicle controller, and the original communication frequency may indicate the load of the communication bus of the electric vehicle, so the current load of the communication bus is taken into account when acquiring the adjustment frequency in this embodiment of this disclosure, thereby avoiding affecting normal operation of other modules of the electric vehicle when increasing the transmission speed of the charging device information.

According to an embodiment of this disclosure, the charging device information sending unit 704 is configured to send the charging device information including the supply voltage and the switch state of the charging device acquired by the charging device information acquisition unit 701 to the electric vehicle controller according to the adjustment frequency acquired by the adjustment frequency acquisition module 7032, so that the electric vehicle controller receives the charging device information and determine the fault of the charging device based on the charging device information more quickly.

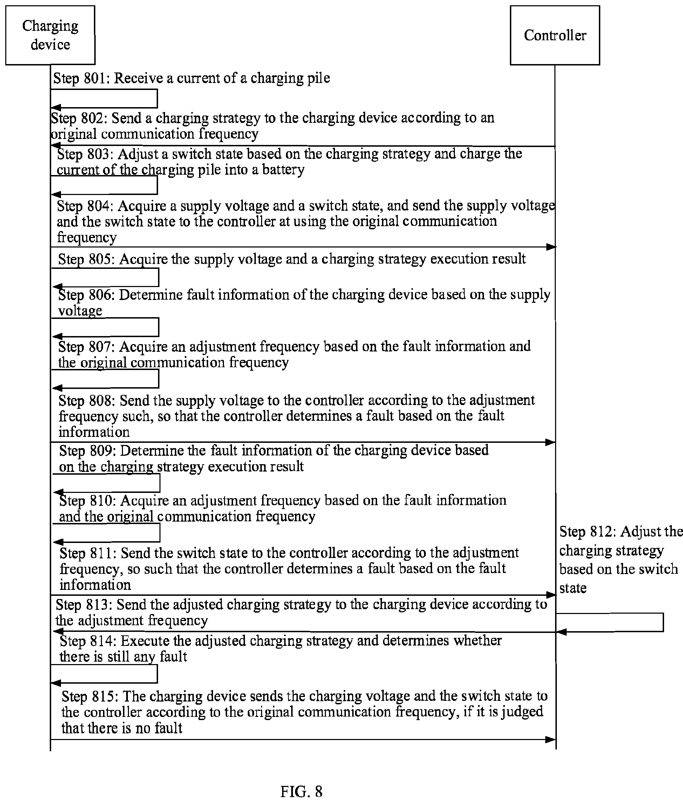

FIG. 8 shows a data flow diagram showing that the charging device feeds back the fault to the controller according to an embodiment of this disclosure. The process includes:
Step 801: The charging device receives a current of a charging pile.
   In this step, the charging device may further acquire information of the charging pile and send the information of the charging pile to the controller, so that the controller generates a charging strategy based on the information of the charging pile.
Step 802: The controller sends a charging strategy to the charging device according to an original communication frequency.
Step 803: The charging device adjusts a switch state based on the charging strategy and charges the current of the charging pile into a battery.
   In this step, the charging device may include a plurality of switches, and control each of the switches to be opened and closed based on the charging strategy to charge the current of the charging pile into the battery.
Step 804: The charging device acquires a supply voltage and a switch state, and sends the supply voltage and the switch state to the controller using the original communication frequency.
   In this step, when the charging device is not faulty, it is required to acquire the supply voltage and the switch state of the charging device and send the supply voltage and the switch state to the controller, so that the controller monitors the operation of the charging device.
Step 805: The charging device acquires the supply voltage and a charging strategy execution result.
   In this step, the charging device acquires the supply voltage and the charging strategy execution result in the fault state, and determines whether a fault has occurred based on the supply voltage and the charging strategy execution result.
Step 806: The charging device determines fault information of the charging device based on the supply voltage.

In this step, the charging device determines the fault information of the charging device based on a difference between the supply voltage in the fault state and a supply voltage preset value. The fault information includes a fault type. For example, the difference between the supply voltage and the supply voltage preset value may indicate whether undervoltage or overvoltage occurs to the charging device. If undervoltage occurs to the charging device, the excessively low supply voltage will not be able to meet the operating needs of the modules of the charging device. If overvoltage occurs to the charging device, the excessively high supply voltage will lead to the damage of one or some modules of the charging device. In addition, when undervoltage or overvoltage occurs, the specific faulty modules may be further determined based on physical characteristics of electronic components in the modules of the charging device. For example, when the supply voltage is lower than the preset voltage value within a certain range, it can be determined which modules can still operate normally and which modules cannot operate normally.

In addition, the fault type of the electric vehicle charging device may further be determined based on the supply voltage and a pre-configured correspondence between a preset supply voltage range and the fault type. Specifically, the correspondence between the supply voltage range and the fault type as shown in Table 1 may be pre-configured, and then the supply voltage range corresponding to the current supply voltage value of the charging device may be found, thereby determining the fault type corresponding to the current supply voltage value.

In this embodiment of this disclosure, the fault type indicated by the supply voltage of the charging device may include undervoltage with function limitation, undervoltage without function limitation, overvoltage with function limitation, and overvoltage without function limitation that are shown in Table 1.

Step 807: The charging device acquires an adjustment frequency based on the fault information and the original communication frequency.

In this step, the charging device may find a frequency value that corresponds to both the original communication frequency and fault type in the preset frequency table, and take the found frequency value as the adjustment frequency. The frequency value that corresponds to both the designated original communication frequency and fault type may be obtained from the preset frequency table that uses the original communication frequency and the fault type as indexes. The magnitude of the frequency value may indicate the severity of the fault type. The more severe a fault is, the greater the corresponding frequency value will be. In this way, the time for the controller to receive the charging device information is reduced.

Step 808: The charging device sends the supply voltage to the controller according to the adjustment frequency, so that the controller determines a fault based on the fault information.

In this step, the charging device sends the supply voltage to the controller according to the adjustment frequency higher than the original communication frequency, so the controller receives the supply voltage of the charging device at the time of the fault more quickly, thereby determining the fault of the charging device more quickly.

Step 809: The charging device determines the fault information of the charging device based on the charging strategy execution result.

In this step, the fault information includes a fault type, and the charging strategy execution result includes an execution state of the charging strategy and a switch state. The execution state indicates whether the charging strategy has been executed. The difference between the switch state of the charging device and the switch state in the charging strategy is calculated, and a switch of the charging device different from the charging strategy is found based on the difference; the fault of the charging strategy unexecuted may be determined based on the execution state; and the fault of the charging strategy executed unsuccessfully may be determined based on the combination of fault type determined based on the difference and the fault type of the charging device determined based on the execution state.

In addition, the fault type of the electric vehicle charging device may further be determined based on the switch state and a pre-configured correspondence between a preset switch state and the fault type. Specifically, the correspondence between the switch state and the fault type may be pre-configured, and then it is determined which pre-configured switch state the current switch state of the charging device belongs to, thereby obtaining the fault type corresponding to the current switch state.

Step 810: The charging device acquires an adjustment frequency based on the fault information and the original communication frequency.

In this step, similar to step 807, the charging device may find a frequency value that corresponds to both the original communication frequency and the fault type in the preset frequency table and take the found frequency value as the adjustment frequency.

Step 811: The charging device sends the switch state to the controller according to the adjustment frequency, so that the controller determines a fault based on the fault information.

In this step, the charging device sends the switch state to the controller according to the adjustment frequency higher than the original communication frequency, so the controller receives the switch state of the charging device at the time of the fault more quickly, thereby determining the fault of the charging device more quickly.

Step 812: The controller adjusts the charging strategy based on the switch state.

Step 813: The controller sends the adjusted charging strategy to the charging device according to the adjustment frequency.

In this step, in order to deal with the fault more quickly, the adjusted charging strategy is sent to the charging device according to the adjustment frequency higher than the original communication frequency, so the charging device receives the adjusted charging strategy more quickly, so as to deal with the fault by executing the adjusted charging strategy.

Step 814: The charging device executes the adjusted charging strategy and determines whether there is still any fault.

In this step, after executing the adjusted strategy, the charging device determines whether there is still any fault by the same method as in steps 806 and 809, and if so, repeats step from 805 to 811.

In addition, the charging device may further determine whether the fault type of the charging device being the undervoltage without function limitation or the overvoltage without function limitation has changed within a preset time; andthe charging device sends the supply voltage of the charging device to the electric vehicle controller according to the original communication frequency, if it is judged to be not changed. The faults of the undervoltage without function limitation and the overvoltage without function limitation are not severe faults, and the charging device can still operate normally, so it can be judged whether the fault type of the charging device being the undervoltage without function limitation or the overvoltage without function limitation has changed within the preset time. The preset time may be set based on the adjustment frequency. For example, if the adjustment frequency is 20 ms, then it can be determined whether the fault type of the charging device being the undervoltage without function limitation or the overvoltage without function limitation has changed within the time range corresponding to 5 adjustment frequencies. The charging device sends the supply voltage of the charging device to the electric vehicle controller according to the original communication frequency, if it is judged to be not changed, thereby reducing the pressure of the communication bus of the electric automobile.

Step 815: The charging device sends the charging voltage and the switch state to the controller according to the original communication frequency, if it is judged that there is no fault.

In this step, the charging device communicates with the electric vehicle controller at the original communication frequency to reduce the pressure of the communication bus, if there is no fault, thereby ensuring normal operation of other modules of the electric vehicle.

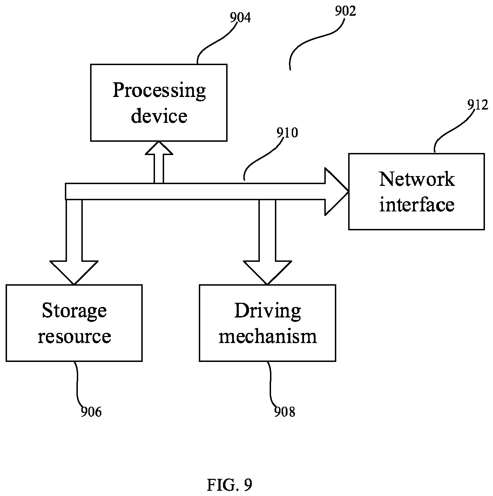

FIG. 9 shows a schematic structural diagram of a computer device according to an embodiment of this disclosure. The fault feedback apparatus of an electric vehicle charging device in this disclosure may be the computer device in this embodiment that executes the above method of this disclosure. The computer device 902 may include one or more processing devices 904, such as one or more central processing units (CPUs), and each processing unit may implement one or more hardware threads. The computer device 902 may further include any storage resource 906 configured to store any type of information such as codes, settings, data and the like. Without limitation, for example, the storage resource 906 may include any one or a combination selected from the following: any type of RAM, any type of ROM, a flash memory device, a hard disk, an optical disk, etc. More generally, any storage resource may use any technology to store information. Further, any storage resource may provide volatile retention or nonvolatile retention of information. Further, any storage resource may represent fixed or removable components of the computer device 902. In one case, when the processing device 904 executes an associated instruction stored in any storage resource or combination of storage resources, the computer device 902 may execute any operation of the associated instruction. The computer device 902 further includes one or more driving mechanisms 908 for interacting with any storage resource, such as a crystal oscillator, to provide a clock signal for the processing device during operation.

The computer device 902 may further include one or more network interfaces 912, such as a CAN receiving module configured to receive data sent by the controller. One or more communication buses 910 couple the components described above together.

Corresponding to the method in FIG. 2 to FIG. 5 and FIG. 8, an embodiment of this disclosure further provides a computer-readable storage medium. The computer-readable storage medium stores a computer program therein. When run by a processor, the computer program executes the steps of the optimized method of the fault feedback apparatus of an electric vehicle charging device.

An embodiment of this disclosure further provides a computer-readable instruction. When a processor executes the instruction, a program therein causes the processor to execute the method shown in FIG. 2 to FIG. 5 and FIG. 8.

It should be understood that in various embodiments of this disclosure, an order of sequence numbers of the foregoing processes does not indicate an execution sequence, and execution sequences of the processes shall be determined based on functions and internal logics thereof and shall not impose any limitation on an implementation process of the embodiments of this disclosure.

It should also be understood that in the embodiment of this disclosure, the term "and/or" used herein is only an association relationship for describing associated objects, and indicates that there may be three relationships. For example, A and/or B may indicate: A exists alone, A and B exist at the same time, and B exists alone. In addition, the character "/" in this disclosure generally indicates that the associated objects before and after are in an "or" relationship.

A person of ordinary skill in the art may understand that, units and algorithm steps of the examples described in the embodiments disclosed in this disclosure may be implemented by electronic hardware, computer software, or a combination thereof. To clearly describe the interchangeability between the hardware and the software, the foregoing description has generally described compositions and steps of each example based on functions. Whether the functions are executed by a mode of hardware or software depends on particular applications and design constraint conditions of the technical solutions. A person skilled in the art may use different methods to implement the described functions for each particular application, but it is not be considered that the implementation goes beyond the scope of this disclosure.

It can be clearly understood by those skilled in the art that for the convenience and conciseness of description, for the specific operating processes of the systems, apparatuses and units described above, reference may be made to the corresponding processes in the aforementioned method embodiments, and details will not be repeated here.

In the several embodiments provided in this disclosure, it should be understood that the disclosed system, apparatus, and method may be implemented in other manners. For example, the device embodiments described above are only schematic. For example, the division of units is only a division of logical functions. In actual implementation, there may be other division manners, for example, a plurality of units or components may be combined or may be integrated into another system, or some features may be omitted or not performed. In addition, the mutual coupling or direct coupling or communication connection shown or discussed may be indirect coupling or communication connection through some interfaces, apparatuses or units, and may also be electrical, mechanical or another form of connection.

The units described as separate components may or may not be physically separated, and the components displayed as units may or may not be physical units, that is, they may be located in one place, or may be distributed in a plurality of network units. Part or all of the units may be selected according to actual needs to achieve the objectives of the solutions of the embodiments in this disclosure.

In addition, the function units in each embodiment of this disclosure may be integrated into one processing unit, or each unit may exist alone physically, or two or more units may be integrated into one unit. The above integrated unit may be implemented in the form of hardware or implemented in the form of a software function unit.

If the integrated unit is implemented in the form of a software function unit and sold or used as an independent product, the integrated unit may be stored in a computer readable storage medium. Based on such an understanding, the technical solution of this disclosure essentially or for the part that contributes to the prior art or all part of the technical solution may be embodied in the form of a software product, and the computer software product is stored in a storage medium and includes several instructions used for enabling one or more computer devices (which may be a personal computer, a server, a network device or the like) to execute all or part of the steps of the methods of the embodiments of this disclosure. The foregoing storage medium can store program codes, such as a USB flash disk, a mobile hard disk, a read-only memory (ROM), a random access memory (RAM), a magnetic disk, an optical disk, or any medium.

In this disclosure, specific embodiments are used to explain the principles and implementations of this disclosure, and the description of the above embodiments is merely used to help understand the method and core idea of this disclosure. Moreover, for those of ordinary skill in the art, according to the concept of this disclosure, there will be changes in the specific implementation and the scope of application. In summary, the content of this specification should not be understood as a limitation to this disclosure.

## Claims

1. A fault feedback method of an electric vehicle charging device, comprising:
acquiring charging device information of an electric vehicle charging device;
determining fault information of the charging device based on the charging device information;
acquiring, based on an original communication frequency of the charging device information and the fault information, an adjustment frequency higher than the original communication frequency, wherein the original communication frequency of the charging device information is set by an electric vehicle controller; and
sending the charging device information to the electric vehicle controller according to the adjustment frequency, so that the electric vehicle controller determines a fault of the charging device based on the charging device information.

2. The fault feedback method of an electric vehicle charging device according to claim 1, wherein the fault information comprises a fault type.

3. The fault feedback method of an electric vehicle charging device according to claim 2, wherein the acquiring, based on an original communication frequency of the charging device information and the fault information, the adjustment frequency higher than the original communication frequency further comprises: finding a frequency value that corresponds to both the original communication frequency and the fault type in a preset frequency table, and taking the found frequency value as the adjustment frequency.

4. The fault feedback method of an electric vehicle charging device according to claim 3, wherein the charging device information comprises a supply voltage of the charging device and a switch state of the charging device.

5. The fault feedback method of an electric vehicle charging device according to claim 4, wherein the determining the fault information of the charging device based on the charging device information further comprises:
calculating a difference between the supply voltage and a supply voltage preset value; and
determining the fault type of the electric vehicle charging device based on the difference.

6. The fault feedback method of an electric vehicle charging device according to claim 4, wherein the determining the fault information of the charging device based on the charging device information further comprises:
determining the fault type of the electric vehicle charging device based on the supply voltage and a pre-configured correspondence between a preset supply voltage range and the fault type.

7. The fault feedback method of an electric vehicle charging device according to claim 5 or 6, wherein the fault type comprises undervoltage with function limitation, undervoltage without function limitation, overvoltage with function limitation, and overvoltage without function limitation.

8. The fault feedback method of an electric vehicle charging device according to claim 7, wherein the method further comprises:
judging whether the fault type of the charging device being the undervoltage without function limitation or the overvoltage without function limitation has changed within a preset time; and
sending, by the charging device, the supply voltage of the charging device to the electric vehicle controller according to the original communication frequency, if it is judged to be not changed.

9. The fault feedback method of an electric vehicle charging device according to claim 4, wherein the determining the fault information of the charging device based on the charging device information further comprises:
determining the fault type of the electric vehicle charging device based on the switch state and a pre-configured correspondence between a preset switch state and the fault type.

10. The fault feedback method of an electric vehicle charging device according to claim 4, wherein before the acquiring the charging device information of the electric vehicle charging device, the method further comprises:
acquiring a charging strategy sent by the electric vehicle controller using the original communication frequency; and
executing the charging strategy to obtain an execution result, wherein the execution result comprises the switch state of the charging device.

11. The fault feedback method of an electric vehicle charging device according to claim 10, wherein the execution result further comprises an execution state indicating whether the charging strategy has been executed; and
the determining the fault information of the charging device based on the charging device information further comprises:
calculating a difference between the switch state of the charging device and the charging strategy, and determining the fault type of the charging device based on the difference, and/or determining the fault type of the charging device based on the execution state.

12. The fault feedback method of an electric vehicle charging device according to claim 1, wherein the method further comprises:
judging whether the charging device still has a fault based on the charging device information; and
communicating, by the charging device, with the electric vehicle controller using the original communication frequency, if it is judged that there is no fault.

13. A fault feedback apparatus of an electric vehicle charging device, comprising:
a charging device information acquisition unit configured to acquire charging device information of an electric vehicle charging device;
a fault information determination unit configured to determine fault information of the charging device based on the charging device information;
an adjustment frequency acquisition unit configured to acquire, based on an original communication frequency of the charging device information and the fault information, an adjustment frequency higher than the original communication frequency, wherein the original communication frequency of the charging device information is set by an electric vehicle controller; and
a charging device information sending unit configured to send the charging device information to the electric vehicle controller according to the adjustment frequency, so that the electric vehicle controller determines a fault of the charging device based on the charging device information.

14. The fault feedback apparatus of an electric vehicle charging device according to claim 13, wherein the fault information comprises a fault type.

15. The fault feedback apparatus of an electric vehicle charging device according to claim 14, wherein the adjustment frequency acquisition unit further comprises:
an original communication frequency acquisition module configured to acquire the original communication frequency; and
an adjustment frequency acquisition module configured to find a frequency value that corresponds to both the original communication frequency and the fault type in a preset frequency table, and take the found frequency value as the adjustment frequency.

16. The fault feedback apparatus of an electric vehicle charging device according to claim 15, wherein the charging device information comprises a supply voltage of the charging device and a switch state of the charging device.

17. The fault feedback apparatus of an electric vehicle charging device according to claim 16, wherein the fault information determination unit further comprises:
a supply voltage difference calculation module configured to calculate a difference between the supply voltage and a supply voltage preset value; and
the fault information determination unit is further configured to determine the fault type of the electric vehicle charging device based on the difference.

18. The fault feedback apparatus of an electric vehicle charging device according to claim 16, wherein the fault information determination unit further comprises:
a voltage range comparison module configured to determine the fault type of the electric vehicle charging device based on the supply voltage and a pre-configured correspondence between a preset supply voltage range and the fault type.

19. The fault feedback apparatus of an electric vehicle charging device according to claim 17 or 18, wherein the fault type comprises undervoltage with function limitation, undervoltage without function limitation, overvoltage with function limitation, and overvoltage without function limitation.

20. The fault feedback apparatus of an electric vehicle charging device according to claim 19, wherein the fault information determination unit further comprises:
a fault type monitoring module configured to judge whether the fault type of the charging device being the undervoltage without function limitation or the overvoltage without function limitation has changed within a preset time; and
the charging device sends the supply voltage of the charging device to the electric vehicle controller according to the original communication frequency, if it is judged to be not changed.

21. The fault feedback apparatus of an electric vehicle charging device according to claim 16, wherein the fault information determination unit further comprises:
a switch state comparison module configured to determine the fault type of the electric vehicle charging device based on the switch state and a pre-configured correspondence between a preset switch state and the fault type.

22. The fault feedback apparatus of an electric vehicle charging device according to claim 16, wherein the charging device information acquisition unit further comprises:
a charging strategy acquisition module configured to acquire a charging strategy sent by the electric vehicle controller using the original communication frequency; and
a charging strategy execution module configured to execute the charging strategy to obtain an execution result, wherein the execution result comprises the switch state of the charging device.

23. The fault feedback apparatus of an electric vehicle charging device according to claim 22, wherein the execution result further comprises an execution state indicating whether the charging strategy has been executed; and
the fault information determination unit further comprises:
a switch state difference calculation module configured to calculate a difference between the switch state of the charging device and the charging strategy, and determine the fault type of the charging device based on the difference, and/or an execution state analysis module configured to determine the fault type of the charging device based on the execution state.

24. The fault feedback apparatus of an electric vehicle charging device according to claim 13, wherein
the fault information determination unit is further configured to judge whether the charging device information still has a fault based on the charging device information; and
the charging device information sending unit is further configured to communicate with the electric vehicle controller using the original communication frequency, if it is judged that there is no fault.

25. A computer device, comprising a memory, a processor, and a computer program stored in the memory, wherein when run by the processor, the computer program executes an instruction of the method according to any one of claims 1 to 12.

26. A computer storage medium storing a computer program, wherein when run by a processor of a computer device, the computer program executes an instruction of the method according to any one of claims 1 to 12.
